# EUROPEAN PATENT SPECIFICATION

(11) **EP 2 947 843 B1**
(45) Date of publication and mention of the grant of the patent: **13.09.2017**
(21) Application number: 15162950.8
(22) Date of filing: 09.04.2015
(51) Int. Cl.: H04L 29/06, H04N 21/233, H04N 21/239, H04N 21/633, H04L 29/08

(54) **SERVER APPARATUS, DISPLAY APPARATUS, SYSTEM, AND CONTROLLING METHODS THEREOF**
SERVERVORRICHTUNG, ANZEIGEVORRICHTUNG, SYSTEM UND STEUERUNGSVERFAHREN DAFÜR
APPAREIL SERVEUR, APPAREIL D'AFFICHAGE, SYSTÈME ET PROCÉDÉS DE COMMANDE DE CEUX-CI

(30) Priority: 23.05.2014 KR 20140062228
(43) Date of publication of application: 25.11.2015
(73) Proprietor: Samsung Electronics Co., Ltd., Gyeonggi-do 443-742 (KR)
(72) Inventor: Park, Se-dong, Seoul (KR); Lee, Dai-boong, Gyeonggi-do (KR)
(74) Representative: Appleyard Lees IP LLP

(56) References cited:
- EP-A1- 1 855 478
- EP-A2- 2 675 179
- US-B1- 6 993 591
- Csaba Okrona: "What Is a HTTP HEAD Request Good for? Some Uses", , 27 August 2011 (2011-08-27), XP055139472, Retrieved from the Internet: URL:https://ochronus.com/http-head-request -good-uses/ [retrieved on 2014-09-10]

## Description

### BACKGROUND

### 1. Field

Apparatuses, systems, and methods consistent with exemplary embodiments relate to a server apparatus, a display apparatus, a system, and controlling methods thereof, and more particularly, to a server apparatus that provides a moving image, a display apparatus, a system, and controlling methods thereof.

### 2. Description of the Related Art

In recent years, as communication technology and electronic apparatus technology have developed, various server apparatuses and display apparatuses have been researched. Server apparatuses that provide various types of content, including moving images (motion picture or video content), have been installed by various providers, and the types of devices that can be used to display such content has diversified, including portable phones, tablet personal computers (PCs), laptop PCs, and smart televisions (TVs). In particular, an environment has been created in which a household may have several TVs, and members of the family have portable phones, tablet PCs, or the like that are used to view moving images.

The rate of transmitting moving image or video content becomes faster as transmission speeds in Internet communication improves, and an environment has been created in which devices can process moving image content where the data size of the content is large. Since the display apparatuses also have the ability to reproduce images at high resolution, even in response to a moving image with high quality being reproduced, the sharpness of the moving images is maintained. Therefore, moving image content providers tend to produce moving images with high quality, and user satisfaction is increased due to the sharpness of the image.

Even though various types of display apparatuses are provided, a server apparatus is required to provide the moving image to the various display apparatuses. Therefore, since the moving image has to be provided to the various types of display apparatuses, the performance capability of the server apparatus may be very remarkable. However, the performance capability of the different display apparatuses may be diverse. In particular, the performance capability of display devices such as portable phones or tablet PCs are limited so that the display devices become small and light. Further, it can be difficult to quickly process moving image content where the amount of data to be processed is large, even in laptop PCs or smart TVs. Therefore, the need to reduce the time required for moving image reproduction has emerged.

Specifically, in response to the moving image stream being received in the display apparatus, there are delay times associated with reproducing the moving image stream, such as the time required for buffering, the time required for parameter parsing, the time required for parameter setting, or the time required for processing. In particular, the time required for parameter parsing is increased as the size of the data of moving image or video content increases and the performance of the display apparatus is degraded. Therefore, there is a need for a method for reducing the delay time.

EP 2 675 179 A2 describes a server-based profile generating and managing system, method and apparatus. The system includes a stream capture server which captures a received broadcasting signal stream to generate profile data and transmits the profile data to a web server, the web server which receives the profile data from the stream capture server, updates the profile data in a new version, and transmits the profile data if requested by a broadcasting reception apparatus, and the broadcasting reception apparatus which requests and receives a selected profile data to and from the web server and sets a service program based on the received profile data.

Csaba Okrona: "What is a HTTP HEAD Request Good for? Some Uses" describes that the HTTP HEAD Request asks for a response identical to the one that would correspond to a GET request, but without the response body. This is described as being useful for retrieving meta-information written in response headers, without having to transport the entire content.

EP 1 855 478 A1 describes sending a join request from a viewer towards a TV server to zap towards a TV channel. There upon, a low resolution version of the TV channel is described to be temporarily unicasted towards the viewer. In a second step, a switch is also described to be realized from the low resolution version of the TV channel to a multicasted high resolution version of the TV channel.

### SUMMARY

One or more exemplary embodiments may overcome the above disadvantages and other disadvantages not described above. However, it is understood that one or more exemplary embodiment are not required to overcome the disadvantages described above, and may not overcome any of the problems described above.

One or more exemplary embodiments are to provide a server apparatus which parses a parameter required for moving image reproduction and provides the parsed parameter according to a request of a user, a display apparatus, a system, and controlling methods as defined by the present claims.

### BRIEF DESCRIPTION OF THE DRAWINGS

The above and/or other aspects will be more apparent by describing in detail exemplary embodiments, with reference to the accompanying drawings, in which:
FIG. 1 is a block diagram illustrating a configuration of a service providing system according to an exemplary embodiment;
FIG. 2 is a block diagram illustrating a configuration of a server apparatus according to an exemplary embodiment;
FIGS. 3A and 3B are block diagrams illustrating configurations of display apparatus according to exemplary embodiments;
FIG. 4 is a sequence diagram illustrating a signal processing process of a system according to an exemplary embodiment;
FIG. 5 is a view illustrating an effect according to an exemplary embodiment;
FIG. 6 is a view illustrating configurations and signal processing of a server apparatus and a display apparatus according to an exemplary embodiment;
FIG. 7 is a flow chart illustrating a method of controlling a server apparatus according to an exemplary embodiment; and
FIG. 8 is a flow chart illustrating a method of controlling a display apparatus according to an exemplary embodiment.

### DETAILED DESCRIPTION OF THE EXEMPLARY EMBODIMENTS

Hereinafter, exemplary embodiments will be described in more detail with reference to the accompanying drawings.

In the following description, the same reference numerals are used for the same elements when they are depicted in different drawings. The matters defined in the description, such as detailed construction and elements, are provided to assist in a comprehensive understanding of the exemplary embodiments. Thus, it is apparent that the exemplary embodiments can be carried out without those specifically defined matters. Also, functions or elements known in the related art are not described in detail since they would obscure the exemplary embodiments with unnecessary detail.

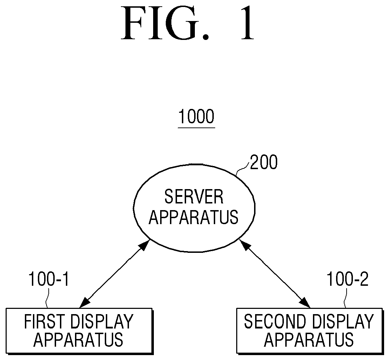

FIG. 1 is a block diagram illustrating a configuration of a service providing system according to an exemplary embodiment.

Referring to FIG. 1, a service providing system 1000 includes a server apparatus 200, a first display apparatus 100-1, and a second display apparatus 100-2.

The server apparatus 200 performs communication with the first display apparatus 100-1 and the second display apparatus 100-2, and functions to perform streaming of content, specifically, on moving image or video content.

The server apparatus 200 may be being implemented with a settop box equipped at home, but server apparatus 200 is not limited to such a configuration. In another exemplary embodiment server apparatus 200 may be implemented as an external server , such as a server provided by a service provider. For example, in the case of the server apparatus 200 being provided by the service provider, the display apparatuses 100-1 and 100-2 may receive a moving image stream (e.g., streaming video content or an encoded video stream) or the like from the server apparatus 200, that is, a service provider through an Internet connection, and reproduce the received moving image stream. In response to the server apparatus 200 being implemented with a settop box equipped at home, the display apparatuses 100-1 and 100-2 may be coupled to the settop box in a wired or wireless manner, receive a moving image stream, and reproduce the received moving image stream.

The first and second display apparatuses 100-1 and 100-2 may be implemented to be coupled to the server apparatus 200 in a wired or wireless manner.

For example, the first display apparatus 100-1 may include a portable phone, a smart phone, and a personal digital assistant (PDA), or the like including a Wi-Fi communication module (not shown). Using wireless access technology according to a Wi-Fi communication protocol, the first display apparatus 100-1 may be directly coupled to a moving image service provider through an Internet router provided at home or the first display apparatus 100-1 may be coupled to the moving image service provider through a settop box equipped at home.

The second display apparatus 100-2 may include a laptop PC, a desktop PC, a tablet PC, a smart TV, or the like. The second display apparatus may be coupled to Internet in a wired manner, receive a moving image provided from a service provider, and reproduce the received moving image. Further, the second display apparatus 100-2 may be coupled to a settop box equipped at home in a wired or wireless manner, receive the moving image, and reproduce the received moving image.

The server apparatus 200 may simultaneously transmit a moving image stream to the first display apparatus 100-1 and the second display apparatus 100-2. In general, the server apparatus 200 may have high performance transmission capability, and simultaneously transmit a plurality of moving image streams having large data sizes to the display apparatuses. In particular, the server apparatus 200 may parse a parameter required for moving image reproduction and provide the parsed parameter to the display apparatuses in an exemplary embodiment. For example, the parameter required for reproduction parsed and provided by the server apparatus may include a parameter required by the display apparatus to perform a decoding and reproduction operation in order to reproduce the moving image stream. By providing the parsed parameter to the display apparatus, the time required for reproduction of the moving image stream may be reduced because the display apparatus is not required to parse the stream to determine the parameter, but may instead use the parsed parameter as provided by the server apparatus. Hereinafter, the service providing system according to the exemplary embodiment will be described in detail with reference to detailed configurations of the server apparatus and the display apparatus.

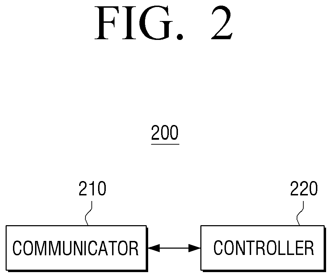

FIG. 2 is a block diagram illustrating a configuration of a server apparatus according to an exemplary embodiment.

Referring to FIG. 2, the server apparatus 200 includes a communicator 210 and a controller 220. Only configuration elements involved in the operations according to various exemplary embodiments are illustrated in FIG. 2, and illustration for other detailed configuration elements will be omitted.

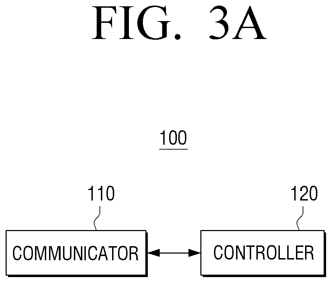

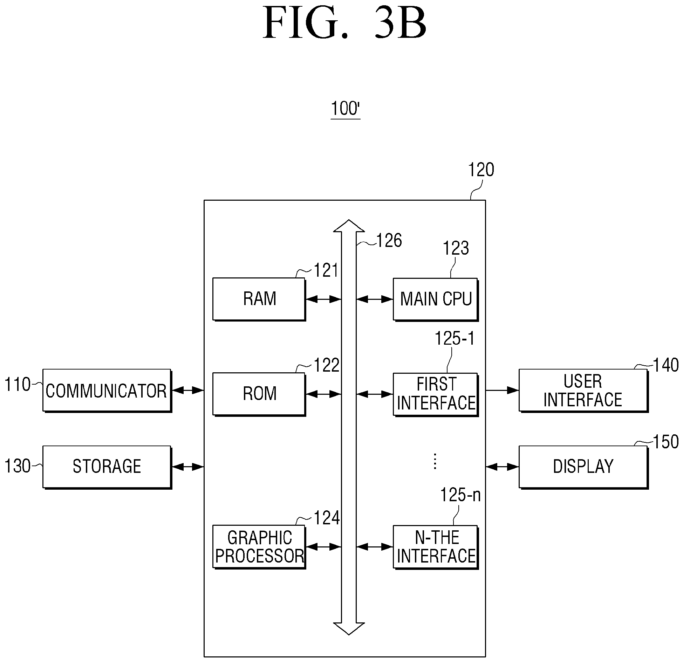

The communicator 210 may include a transceiver that performs communication with the display apparatus (see 100 of FIG. 3) in a wired or wireless manner. The communicator 210 may perform communication with the display apparatus 100 through various communication methods such as Bluetooth (BT), wireless fidelity (Wi-Fi), Zigbee, infrared (IR), serial interface, universal serial bus (USB), or near field communication (NFC).

The communicator 210 may perform communication with the display apparatus 100, and transmit/receive various signals to/from the display apparatus 100. In particular, the communicator 210 may receive a request signal for a parameter required for moving image reproduction, a moving image request signal, or the like from the display apparatus 100.

The communicator 210 may transmit the parameter required for moving image reproduction and a moving image stream to the display apparatus 100. The parameter required for moving image reproduction may include one or more of moving image identification information, a moving image stream type, program clock reference (PCR) information, a moving image size, a frame rate, or channel information.

The communicator 210 may receive the moving image or video content to be provided to the display apparatus 100 from a service provider. The communicator 210 may receive the moving image content from the service provider for some period in advance of when the content is reproduced by the display apparatus 100. Alternatively, the communicator 210 may request the moving image content from the service provider and receive the requested moving image content from the service provider as soon as the moving image content is requested by the display apparatus 100.

The controller 220 functions to control an overall operation of the server apparatus 200.

In particular, the controller 220 may control the server apparatus 200 based on a signal received from the display apparatus 100.

Specifically, in response to the request signal for the parameter required for moving image reproduction being received from the display apparatus 100, the controller 220 transmits a parameter that is parsed from a moving image stream to the display apparatus 100. The controller 220 may parse the parameter from the moving image stream based on the request of the display apparatus 100. Alternatively, the server apparatus 200 may further include a storage. The server apparatus 200 may store the parameter that is parsed from the moving image stream in the storage in advance of the request, and retrieve the stored parameter from the storage based on the request of the display apparatus 100.

The request signal for the parameter required for moving image reproduction from the display apparatus 100 may be included in a meta information request signal. Thus, the controller 220 may add the parameter that is parsed from the moving image stream to a meta information response signal, and transmit the meta information response signal including the parameter required for moving image reproduction to the display apparatus. If the request signal for the parameter required for moving image reproduction is not included in the meta information request signal, the controller 220 does not perform parsing on the parameter required for moving image reproduction from the moving image stream, and transmits the meta information response signal without the parameter parsed from the moving image stream.

The parameter required for moving image reproduction may include one or more of moving image identification information, a moving image stream type, PCR information, a moving image size, a frame rate, or channel information.

The controller 220 may receive the moving image request signal from the display apparatus 100, and the controller 220 may transmit the moving image stream to the display apparatus 100. The server apparatus 200 may receive the moving image stream from the service provider, and transmit the received moving image stream to the display apparatus 100, but this is merely exemplary. In some cases, the server apparatus 200 may receive a moving image stream of a certain period from the service provider and store the received moving image stream in the storage for some period in advance of when the content is requested by the display apparatus 100, and the server apparatus 200 may retrieve the moving image stream from the storage and transmit the retrieved moving image stream to the display apparatus 100 according to the request of the display apparatus 100. Further, the server apparatus 200 may add the parsed parameter to the moving image stream instead of adding the parsed parameter to the meta information response signal, and transmit the moving image stream including the parsed parameter.

FIGS. 3A and 3B are block diagrams illustrating configurations of display apparatuses according to exemplary embodiments.

Referring to FIG. 3A, the display apparatus 100 includes a communicator 110 and a controller 120. Only configuration elements involved in the operations according to various exemplary embodiments are illustrated in FIG. 3A, and illustration for other detailed configuration elements will be omitted.

The communicator 110 performs communication with the server apparatus 200 in a wired or wireless manner. The communicator 110 may be coupled to the server apparatus 200, and transmit/receive various signal to/from the server apparatus 200. In particular, the communicator 110 may receive the parsed parameter, the moving image stream, or the like from the server apparatus 200.

Further, the communicator 110 may transmit the request signal for the parameter required for moving image reproduction and the moving image request signal to the server apparatus 200. The parameter required for moving image reproduction may include one or more of moving image identification information, a moving image stream type, PCR information, a moving image size, a frame rate, or channel information.

The controller 120 controls an overall operation of the display apparatus 100.

In particular, in response to an input such as a channel change event being received from the user, and a moving image being reproduced, the controller 120 may transmit the request signal for the parameter required for moving image reproduction to the server apparatus 200. The controller 120 may add the request signal for the parameter required for moving image reproduction to the meta information request signal, and transmit the meta information request signal including the parameter required for moving image reproduction to the server apparatus 200.

In response to the parsed parameter being received from the server apparatus 200, the controller 120 may have stored the parsed parameter in a cache memory or the storage. The parsed parameter may be added to the meta information response signal and received, and the controller 120 may extract the parsed parameter from the meta information response signal.

The controller 120 may receive the parsed parameter and store the received parsed parameter, and then the controller 120 may transmit the moving image request signal to the server apparatus 200. The controller 120 may transmit the moving image request signal to the server apparatus 200, and then the controller 120 may receive the moving image stream from the server apparatus 200, and reproduce the received moving image stream based on the parsed parameter.

In response to the parsed parameter being not received from the server apparatus 200 after the request signal for the parameter required for moving image reproduction is transmitted, or in response to the parsed parameter being not extracted from the received meta information response signal, the controller 120 may transmit the moving image request signal to the server apparatus 200. However, this is merely exemplary, and in other exemplary embodiments the controller 120 may retransmit the request signal for the parameter required for moving image reproduction to the server apparatus 200.

In response to the parsed parameter being not received from the server apparatus 200 or in response to the parsed parameter being not extracted from the received meta information response signal, the controller 120 may receive the moving image stream from the server apparatus 200 according to the moving image request signal, and the controller 120 may directly parse the received moving image stream, and extract the parameter required for moving image reproduction from the received moving image stream. Then, the controller 120 may reproduce the received moving image stream based on the extracted parameter.

The parameter required for moving image reproduction may include one or more of moving image identification information, a moving image stream type, PCR information, a moving image size, a frame rate, or channel information.

FIG. 3B is a block diagram illustrating a detailed configuration of a display apparatus 100' according to another exemplary embodiment. Referring to FIG. 3B, the display apparatus 100' includes a communicator 110, a controller 120, a storage 130, a user interface 140, and a display 150. The detailed description for portions of the configuration elements illustrated in FIG. 3B, which overlap the configuration elements illustrated in FIG. 3A, will not be repeated.

The controller 120 controls an overall operation of the display apparatus 100 using various programs stored in the storage 130.

Specifically, the controller 120 includes a random access memory (RAM) 121, a read only memory (ROM) 122, a main central processing unit (CPU), a graphic processor 124, first to n-th interfaces 125-1 to 125-n, and a bus 126.

The Ram 121, the ROM 122, the main CPU 123, the graphic processor 124, the first to n-th interfaces 125-1 to 125-n, and the like may be coupled to each other through the bus 126.

The first to n-th interfaces 125-1 to 125-n are coupled to the above-described configuration elements. One of the interfaces 125-1 to 125-n may be a network interface coupled to an external apparatus through a network.

The main CPU 123 accesses to the storage 130, and performs booting using an operating system (O/S) stored in the storage 130. The main CPU 123 performs various operations using various programs, web content, data, or the like stored in the storage 130.

A command set or the like for system booting is stored in the ROM 122. In response to power being supplied according to an input of a turn on command, the main CPU 123 copies the O/S stored in the storage 130 to the RAM 121 and executes the copied O/S to boot the system according to the command stored in the ROM 122. In response to the booting being completed, the main CPU 123 copies the various application programs stored in the storage 130 to the RAM 121, executes application programs copied in the RAM 121, and performs various operations.

The graphic processor 124 generates a screen including various objects such as icons, images, or texts using an operation unit (not shown) and a rendering unit (not shown). The operation unit may calculate attribute values such as coordinate values in which the objects are displayed, and shapes, sizes, and colors of the objects, or the like according to a layout of the screen based on a received control command. The rendering unit generates screens having various layouts including the objects based on the attribute values calculated in the operation unit. The screen generated in the rendering unit is displayed in a display region of the display 150.

The above-described operation of the controller 120 may be performed by the programs stored in the storage 130.

The storage 130 stores various pieces of data such as an O/S software module for driving the display apparatus 100, parameter setting information required for moving image reproduction, or a parsing algorithm.

The controller 120 may communicate with the server apparatus 200 based on the information stored in the storage 130, or display the moving image stream received from the server apparatus 200.

The user interface 140 receives a user command. The user interface 140 may be implemented with various types such as a remote controller receiving unit, a button unit, or a touch pad.

In particular, the user interface 140 may receive at least one of a channel change command for moving image reproduction and a video on demand (VOD) content reproduction command according to an exemplary embodiment.

The display 150 displays various screens. The screens may include a content reproduction screen for various pieces of content such as an image, a moving image, text, or music, an application execution screen including various pieces of content, a web browser screen, a graphic user interface (GUI) screen, or the like.

The display 150 may be implemented with a liquid crystal display (LCD) panel, an organic light emitting diode (OLED), or the like, but the display 150 is not limited thereto. In other exemplary embodiments, the display 150 may be implemented with a flexible display, a transparent display, or the like.

In particular, the display 150 may display a received moving image according to control of the controller 120.

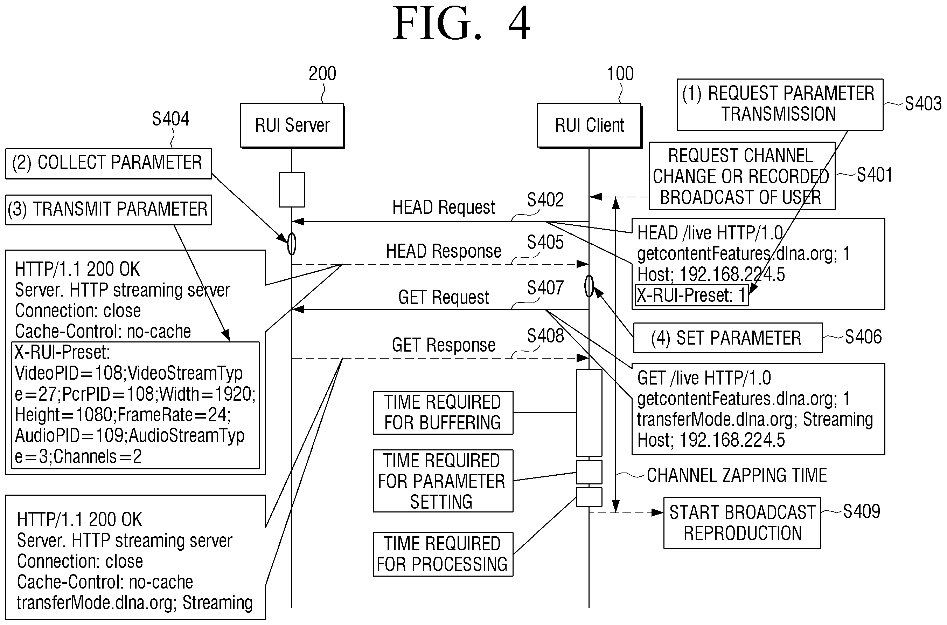

FIG. 4 is a sequence diagram illustrating a signal processing process of a system according to an exemplary embodiment.

The signal processing processes of the server apparatus 200 and the display apparatus 100 will be described with reference to FIG. 4. In one exemplary embodiment, the server apparatus 200 may be implemented with a remote user interface (RUI) server, and the display apparatus 100 may be implemented with a RUI client. That is, the server apparatus 200 may be implemented in a form that provides a remote UI to the display apparatus 100.

Referring to FIG. 4, first, the display apparatus 100 may receive a request for channel change or for a recorded broadcast from the user (S401). The request receiving operation may be performed using the user interface 140 of the display apparatus 100. The user interface 140 may be implemented with various types such as a remote controller receiving unit, a button unit, or a touch pad.

The display apparatus 100 transmits a HEAD Request to the server apparatus 200 (S402). The HEAD Request is a meta information request signal, and the HEAD Request may be a signal for requesting information for a moving image that is to be requested to the server apparatus 200 from the display apparatus 100. In one exemplary embodiment, the display apparatus 100 may add the transmission request signal for the parameter required for moving image reproduction to the HEAD Request and transmit the HEAD Request including the transmission request signal for the parameter required for moving image reproduction (S403) in response to the HEAD Request being transmitted (S402).

In response to the transmission request signal for the parameter required for moving image reproduction being presented (S403), the server apparatus 200 collects the parameter (S404). The server apparatus 200 may parse the parameter from the moving image stream based on the transmission request signal for the parameter required for moving image reproduction, but this is merely exemplary. In other exemplary embodiments, even if the transmission request signal for the parameter required for moving image reproduction is not sent, the server apparatus 200 may parse the moving image stream received from the service provider, and store the parameter in advance of a transmission request signal.

In another exemplary embodiment, the server apparatus 200 does not perform parsing on the parameter if the transmission request signal for the parameter required for moving image reproduction is not presented. Further, the server apparatus 200 may not extract a required parameter from the pre-stored parameters.

In response to the HEAD Request being presented (S402), the server apparatus 200 transmits the HEAD Response to the display apparatus 100 (S405). The HEAD Response a meta information response signal, and the HEAD Response may be a response of information for a moving image which is to be requested to the server apparatus 200 from the display apparatus 100. The parameter may be included in the HEAD Response. The parameter may include one or more of moving image identification information, a moving image stream type, PCR information, a moving image size, a frame rate, or channel information.

If the parameter transmission request from the display apparatus 100 is not presented, the server apparatus 200 may not parse the parameter from the moving image stream or may not extract the previously parsed parameter from the storage. The server apparatus 200 may transmit the HEAD Response without including the parameter to the display apparatus 100 (S405).

In response to the HEAD Response being received (S405), the display apparatus 100 may store the parameter in a cache memory or in the storage and set the parameter in advance (S406). However, in response to the request signal for the parameter required for moving image reproduction being transmitted from the server apparatus 200 but the parameter is not received, the display apparatus 100 may not set the parameter in advance.

The display apparatus 100 sets the parameter (S406), and then the display apparatus 100 transmits a GET Request to the server apparatus 200 (S407). The GET Request may be a moving image stream request signal. Thus, the server apparatus 200 transmits a GET Response to the display apparatus 100 (S408), and the GET Response may be a moving image stream signal. The server apparatus 200 may add the parsed parameter to the HEAD Response and transmit the HEAD Response including the parsed parameter to the display apparatus 100 (S405). Alternatively, the server apparatus 200 may add the parsed parameter to the GET Response and transmit the GET Response including the parsed parameter to the display apparatus 100 (S408).

In response to the request signal for the parameter required for moving image reproduction being transmitted to the server apparatus 200, and the parsed parameter being received from the server apparatus 200, the display apparatus 100 may set the parsed parameter to a cache memory or the like in advance, and reproduce the moving image stream according to the GET Response based on the parsed parameter (S409). In response to the parsed parameter being received from the server apparatus 200 together with the GET Response (S408), the display apparatus 100 may reproduce the moving image stream based on the parsed parameter (S409). Further, in response to the parsed parameter not being received from the server apparatus 200, the display apparatus 100 may directly parse the moving image stream according to the GET Response, and reproduce the moving image stream according to the parsing result (S409).

The display apparatus 100 which receives the moving image stream performs an operation for broadcast reproduction. The operation for broadcast reproduction may include the time required for buffering, the time required for parameter setting, or the time required for processing. However, the display apparatus 100 according to an exemplary embodiment may reduce the time for parsing the parameter and thus reduce a channel zapping time. The channel zapping time may be the time from a user's request for a channel change (a change from one broadcast channel moving image stream to another broadcast channel moving image stream) or for a recorded broadcast to the time the reproduction of the requested channel or recorded broadcast begins.

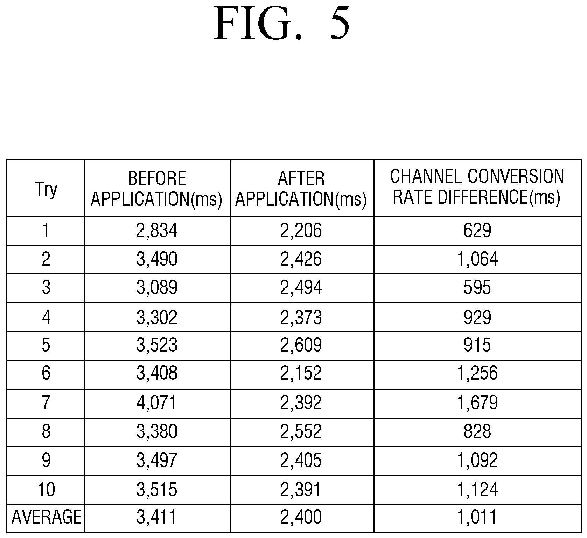

FIG. 5 is a view illustrating an effect according to an exemplary embodiment.

Referring to FIG. 5, the display apparatus 100 according to an exemplary embodiment may not directly parse the parameter from the moving image stream, and receive the parsed parameter from the server apparatus 200, and thus the channel zapping time may be reduced. The "Before Application" column shows the time for channel zapping when the display apparatus is not provided with the parsed parameter but must instead directly parse the parameter in order to reproduce the moving image stream. The "After Application" column shows the resulting time for channel zapping when the display apparatus receives the parsed parameter from server apparatus 200 according to an exemplary embodiment, and thus direct parsing of the parameter by the display apparatus is not required and the time for channel zapping is decreased. The reduction effect in the channel zapping time may be obtained by 1011 ms on average according to the result of ten attempts, as shown in the "Channel Conversion Rate Difference" column in FIG. 5. However, this is merely exemplary, and the different results may be obtained in response to different moving image streams being used.

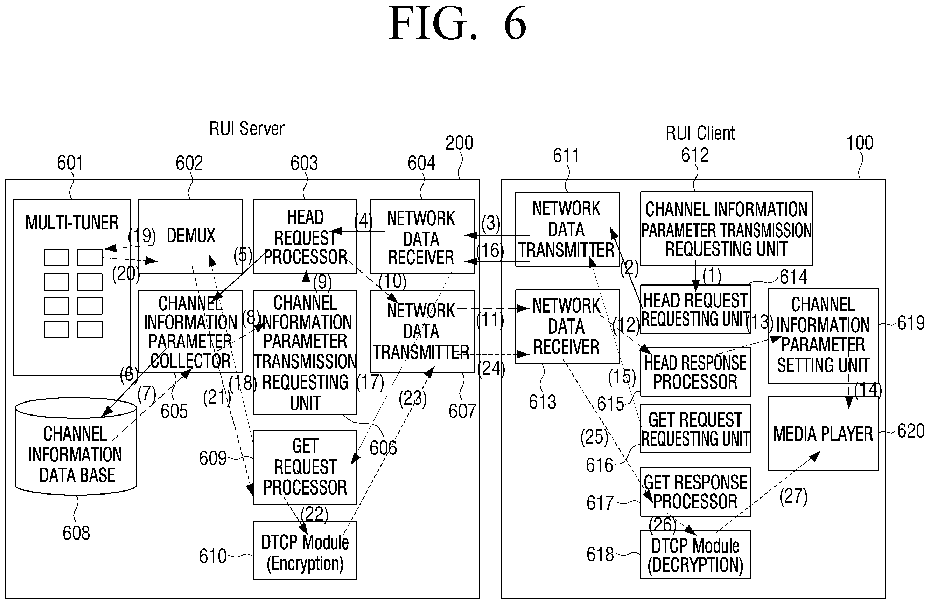

FIG. 6 is a view illustrating configurations and signal processing of a server apparatus and a display apparatus according to an exemplary embodiment.

Referring to FIG. 6, the server apparatus 200 may include a broadcasting receiving device, that is, a multi-tuner 601, a demultiplexter 602, a HEAD Request processor 603, a network data receiver 604, a channel information parameter collector 605, a channel information parameter transmission requesting unit 606, a network data transmitter 607, a channel information data base 608, a GET Request processor 609, and a digital transmission content protection (DTCP) module (encryption) 610.

The display apparatus 100 may include a network data transmitter 611, a channel information parameter transmission requesting unit 612, a network data receiver 613, a HEAD Request requesting unit 614, a HEAD Response processor 615, a GET Request requesting unit 616, a GET Response processor 617, a DTCP module (decryption) 618, a channel information parameter setting unit 619, and a media player 620.

As compared with a related server apparatus, the server apparatus 200 according to an exemplary embodiment may further include the channel information parameter collector 605 and the channel information parameter transmission requesting unit 606. As compared with the related display apparatus, the display apparatus 100 according to an exemplary embodiment may further include the channel information parameter transmission requesting unit 612 and the channel information parameter setting unit 619.

That is, in the related system, the display apparatus 100 transmits a signal to the network data receiver 604 of the server apparatus 200 through the network data transmitter 611 from the HEAD Request requesting unit 614.

The server apparatus 200 transmits a signal received from the network data receiver 604 to the HEAD Request processor 603 and processes the received signal through the HEAD Request processor 603, and then the server apparatus 200 transmits the signal-processed signal to the display apparatus 100 through the network data transmitter 607 again.

The display apparatus 100 processes a signal received through the network data receiver 613 through the HEAD Response processor 615, and then the display apparatus 100 transmits the moving image request signal to the server apparatus 200 through the network data transmitter 611 by the GET Request requesting unit 616.

The server apparatus 200 processes the signal received through the network data receiver 604 through the GET Request processor 609 and the demultiplexter 602, and receives the moving image stream from the broadcasting receiving device (multi-tuner) 601. The received moving image stream is transmitted to the DTCP module (encryption) 610 through the demultiplexter 602 and the GET Request processor 609, and transmitted to the display apparatus 100 through the network data transmitter 607 again.

The display apparatus 100 reproduces the moving image stream received through the network data receiver 613 in the media player 620 through the GET Response processor 617 and the DTCP module (decryption) 618.

With respect to this signal processing, according to an exemplary embodiment, in response to the HEAD Request being requested from the display apparatus 100 to the server apparatus 200, the request signal for the parameter required for moving image reproduction is added through the channel information parameter transmission requesting unit 612, and transmitted.

The HEAD Request received in the server apparatus 200 may be transmitted to the channel information parameter collector 605 through the HEAD Request processor 603, and the channel information parameter collector 605 may collect the related parameter from the channel information data base 608. The collected parameter may be transmitted to the display apparatus 100 through the channel information parameter transmission requesting unit 606 via a path similar to the conventional system again.

The display apparatus 100 may process the HEAD Response signal including the parameter through the HEAD Response processor 615. The HEAD Response signal may be set in the media player 620 through the channel information parameter setting unit 619. Then, in response to the moving image stream being received, the moving image stream may be reproduced using the preset parameter.

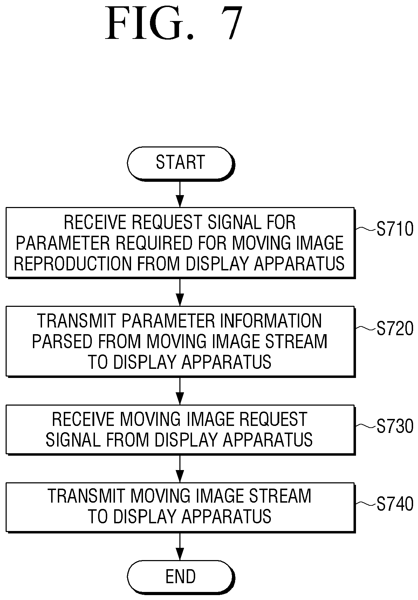

FIG. 7 is a flowchart illustrating a method of controlling a server apparatus according to an exemplary embodiment.

Referring to FIG. 7, according to the method of controlling the server apparatus 200, in response to a request signal for a parameter required for moving image reproduction being received from a display apparatus (S710), the server apparatus 200 transmits the parameter parsed from a moving image stream to the display apparatus (S720).

Then, in response to a moving image request signal being received from the display apparatus (S730), the server apparatus 200 transmits the moving image stream to the display apparatus (S740).

The operation (S720) of transmitting the parsed parameter to the display apparatus may include, in response to the request signal for the parameter required for moving image reproduction being received from the display apparatus, parsing the parameter required for moving image reproduction from the moving image stream, and transmitting the parsed parameter to the display apparatus.

The request signal for the parameter required for moving image reproduction may be included in the meta information request signal, and the parameter parsed from the moving image stream may be included in the meta information response signal.

The parameter required for moving image reproduction may include one or more of the group consisting of moving image identification information, a moving image stream type, PCR information, a moving image size, a frame rate, or channel information.

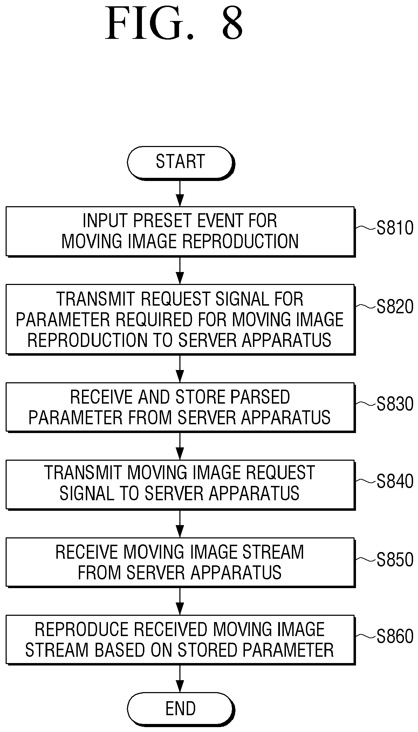

FIG. 8 is a flow chart illustrating a method of controlling a display apparatus according to an exemplary embodiment.

Referring to FIG. 8, according to the method of controlling a display apparatus, in response to a preset event for moving image reproduction being generated (S810), the display apparatus transmits a request signal for a parameter required for moving image reproduction to a server apparatus (S820).

Subsequently, the display apparatus receives the parsed parameter from the server apparatus, and stores the received parsed parameter (S830).

Then, the display apparatus transmits a moving image request signal to the server apparatus (S840). In response to a moving image stream being received from the server apparatus (S850), the display apparatus may reproduce the received moving image stream based on the stored parameter (S860).

The request signal for the parameter required for moving image reproduction may be included in the meta information request signal, and the parameter parsed from the moving image stream may be included in the meta information response signal.

The operation (S860) of reproducing the moving image stream may include reproducing the received moving image stream based on the stored parameter without parsing of the parameter required for moving image reproduction from the received moving image stream in response to the moving image stream being received.

The preset event may include at least one selected from the group consisting of a channel change event and a VOD content reproduction event.

The parameter required for moving image reproduction may include one or more of moving image identification information, a moving image stream type, PCR information, a moving image size, a frame rate, or a channel information.

The display apparatus, the server apparatus, and controlling methods thereof according to the above-described various exemplary embodiments may be implemented in a computer-executable program code, and stored in a non-transitory computer-readable medium. The non-transitory computer-readable medium, in which the program code is stored, may be provided to various devices to be executed by a processor.

As an example, the non-transitory computer-recordable medium, in which a program for performing the operations of transmitting a parameter parsed from a moving image stream to a display apparatus in response to a request signal for the parameter required for moving image reproduction being received from the display apparatus, and transmitting a moving image stream to the display apparatus in response to a moving image request signal being received from the display apparatus is stored, may be provided.

The non-transitory recordable medium is not a medium configured to temporarily store data such as a register, a cache, or a memory but an apparatus-readable medium configured to semi-permanently store data. Specifically, the above-described various applications or programs may be stored in the non-transitory apparatus-readable medium such as a compact disc (CD), a digital versatile disc (DVD), a hard disc, a Blu-ray disc, a USB, a memory card, or a ROM, and provided.

According to the above-described various exemplary embodiments, the time required to reproduce a moving image in a display apparatus is reduced and the convenience of the user is improved.

Although a few preferred embodiments have been shown and described, it will be appreciated by those skilled in the art that various changes and modifications might be made without departing from the scope of the invention, as defined in the appended claims.

All of the features disclosed in this specification (including any accompanying claims, abstract and drawings), and/or all of the steps of any method or process so disclosed, may be combined in any combination defined by the scope of the present claims.

## Claims

1. A server apparatus (200) comprising:
a communication unit (210) configured to perform communication with a display apparatus (100); and
a controller (220) configured to transmit a parameter required for moving image reproduction, that is parsed from a moving image stream, to the display apparatus (100) in response to receiving a request signal for the parameter required for moving image reproduction from the display apparatus (100), and transmit the moving image stream to the display apparatus (100) in response to a moving image request signal being received from the display apparatus (100),
**characterized in that**:
the parameter required for moving image reproduction comprises a parameter required by the display apparatus (100) to perform a decoding and reproduction operation;
the request signal for the parameter required for moving image reproduction is included in a meta information request signal; and
the parameter parsed from the moving image stream is included in a meta information response signal.

2. The server apparatus (200) as claimed in claim 1, wherein the controller (220) is further configured to parse the parameter required for moving image reproduction from the moving image stream and transmits the parsed parameter to the display apparatus (100), in response to receiving the request signal for the parameter required for moving image reproduction from the display apparatus (100).

3. The server apparatus (200) as claimed in claim 1 or 2, further comprising a storage unit configured to store the parameter required for moving image reproduction,
wherein the controller (220) is further configured to retrieve a parameter corresponding to the request signal for the parameter required for moving image reproduction from the storage unit and transmit the retrieved parameter to the display apparatus (100), in response to receiving the request signal for the parameter required for moving image reproduction from the display apparatus (100).

4. The server apparatus (200) as claimed in any one of claims 1 to 3, wherein:
the meta information request signal is a HEAD Request;
the meta information response signal is a HEAD Response;
the moving image request signal is a GET Request; and
the moving image stream is a GET Response.

5. The server apparatus (200) as claimed in any one of claims 1 to 4, wherein the parameter required for moving image reproduction includes one or more of moving image identification information, a moving image stream type, program clock reference, PCR, information, a moving image size, a frame rate, or channel information.

6. A display apparatus (100) comprising:
a communication unit (110) configured to perform communication with a server apparatus (200); and
a controller (120) configured to transmit a request signal for a parameter required for moving image reproduction to the server apparatus (200) in response to a preset event, and to receive a parsed parameter from the server apparatus (200) and store the received parsed parameter,
wherein the controller (120) is configured to reproduce a moving image stream based on the stored parameter in response to the moving image stream being received according to a moving image request signal transmitted to the server apparatus (200),
**characterized in that**:
the parameter required for moving image reproduction comprises a parameter required by the display apparatus (100) to perform a decoding and reproduction operation;
the request signal for the parameter required for moving image reproduction is included in a meta information request signal; and
the parsed parameter is included in a meta information response signal,
wherein the preset event includes at least one of a channel change event and a video on demand, VoD, content reproduction event.

7. The display apparatus (100) as claimed in claim 6, wherein:
the meta information request signal is a HEAD Request;
the meta information response signal is a HEAD Response;
the moving image request signal is a GET Request; and
the moving image stream is a GET Response.

8. The display apparatus (100) as claimed in claim 6 or 7, wherein the controller (120) is further configured to reproduce the received moving image stream based on the stored parameter without parsing of the parameter required for moving image reproduction from the received moving image stream in response to the moving image stream being received.

9. The display apparatus (100) as claimed in any one of claims 6 to 8, wherein the parameter required for moving image reproduction includes at least one of moving image identification information, a moving image stream type, program clock reference, PCR, information, a moving image size, a frame rate, or channel information.

10. A system (1000) comprising:
a display apparatus (100-1, 100-2) configured to transmit a request signal for a parameter required for moving image reproduction to a server apparatus (200) in response to a preset event; and
the server apparatus (200) configured to transmit the parameter parsed from a moving image stream to the display apparatus (100-1, 100-2) in response to the request signal for the parameter required for moving image reproduction being received from the display apparatus (100-1, 100-2), and transmit the moving image stream to the display apparatus (100-1, 100-2) in response to a moving image request signal being received from the display apparatus (100-1, 100-2),
wherein the display apparatus (100-1, 100-2) is further configured to receive the parsed parameter from the server apparatus (200) and stores the received parsed parameter, and the display apparatus (100-1, 100-2) is further configured to reproduce the moving image stream based on the stored parameter in response to the moving image stream being received according to the moving image request signal transmitted to the server apparatus (200),
**characterized in that**:
the parameter required for moving image reproduction comprises a parameter required by the display apparatus (100-1, 100-2) to perform a decoding and reproduction operation;
the request signal for the parameter required for moving image reproduction is included in a meta information request signal; and
the parameter parsed from the moving image stream is included in a meta information response signal,
wherein the preset event includes at least one of a channel change event and a video on demand, VoD, content reproduction event.

11. A method of controlling a server apparatus, the method comprising:
transmitting a parameter required for moving image reproduction, that is parsed from a moving image stream, to a display apparatus (S720) in response to a request signal for the parameter required for moving image reproduction being received from the display apparatus (S710); and
transmitting the moving image stream to the display apparatus (S740) in response to a moving image request signal being received from the display apparatus (S730),
**characterized in that**:
the parameter required for moving image reproduction comprises a parameter required by the display apparatus to perform a decoding and reproduction operation;
the request signal for the parameter required for moving image reproduction is included in a meta information request signal; and
the parameter parsed from the moving image stream is included in a meta information response signal.

12. The method as claimed in claim 11, wherein the transmitting of the parsed parameter to the display apparatus (S720) includes parsing the parameter required for moving image reproduction from the moving image stream and transmitting the parsed parameter to the display apparatus, in response to the request signal for the parameter required for moving image reproduction being received from the display apparatus (S710).

13. The method as claimed in claim 11 or 12, wherein:
the meta information request signal is a HEAD Request;
the meta information response signal is a HEAD Response;
the moving image request signal is a GET Request; and
the moving image stream is a GET Response.

14. A method of controlling a display apparatus, the method comprising:
transmitting a request signal for a parameter required for moving image reproduction to a server apparatus in response to a preset event (S810, S820), receiving the parsed parameter from the server apparatus, and storing the received parsed parameter (S830); and
reproducing a moving image stream based on the stored parameter (S860) in response to the moving image stream being received (S850) in response to a moving image request signal transmitted to the server apparatus (S840),
**characterized in that**:
the parameter required for moving image reproduction comprises a parameter required by the display apparatus to perform a decoding and reproduction operation;
the request signal for the parameter required for moving image reproduction is included in a meta information request signal; and
the parameter parsed from the moving image stream is included in a meta information response signal,
wherein the preset event includes at least one of a channel change event and a video on demand, VoD, content reproduction event.

## Patentansprüche

1. Servervorrichtung (200), umfassend:
eine Kommunikationseinheit (210), die ausgelegt ist, eine Kommunikation mit einer Anzeigevorrichtung (100) vorzunehmen; und
eine Steuereinheit (220), die ausgelegt ist, einen für eine Bewegtbildwiedergabe erforderlichen Parameter, der aus einem Bewegtbildstrom geparst wird, zur Anzeigevorrichtung (100) ansprechend auf den Empfang eines Anforderungssignals für den Parameter, der für eine Bewegtbildwiedergabe erforderlich ist, von der Anzeigevorrichtung (100) zu übertragen, und den Bewegtbildstrom zur Anzeigevorrichtung (100) ansprechend darauf, dass ein Bewegtbild-Anforderungssignal von der Anzeigevorrichtung (100) empfangen wird, zu übertragen;
**dadurch gekennzeichnet, dass**:
der Parameter, der für eine Bewegtbildwiedergabe erforderlich ist, einen Parameter umfasst, der für die Anzeigevorrichtung (100) erforderlich ist, um eine Decodierungs- und Wiedergabeoperation vorzunehmen;
das Anforderungssignal für den Parameter, der für eine Bewegtbildwiedergabe erforderlich ist, in einem Metainformations-Anforderungssignal enthalten ist; und
der Parameter, der aus dem Bewegtbildstrom geparst wird, in einem Metainformations-Antwortsignal enthalten ist.

2. Servervorrichtung (200) nach Anspruch 1, wobei die Steuereinheit (220) ferner ausgelegt ist, den Parameter, der für eine Bewegtbildwiedergabe erforderlich ist, aus dem Bewegtbildstrom zu parsen, und den geparsten Parameter zur Anzeigevorrichtung (100) ansprechend auf den Empfang des Anforderungssignals für den Parameter, der für eine Bewegtbildwiedergabe erforderlich ist, von der Anzeigevorrichtung (100) überträgt.

3. Servervorrichtung (200) nach Anspruch 1 oder 2, ferner umfassend eine Speichereinheit, die ausgelegt ist, den Parameter, der für eine Bewegtbildwiedergabe erforderlich ist, zu speichern,
wobei die Steuereinheit (220) ferner ausgelegt ist, einen Parameter, welcher dem Anforderungssignal für den Parameter entspricht, der für eine Bewegtbildwiedergabe erforderlich ist, aus der Speichereinheit abzurufen und den abgerufenen Parameter zur Anzeigevorrichtung (100) ansprechend auf den Empfang des Anforderungssignals für den Parameter, der für eine Bewegtbildwiedergabe erforderlich ist, von der Anzeigevorrichtung (100) zu übertragen.

4. Servervorrichtung (200) nach einem der Ansprüche 1 bis 3, wobei:
das Metainformations-Anforderungssignal eine HEAD-Anforderung ist;
das Metainformations-Antwortsignal eine HEAD-Antwort ist;
das Bewegtbild-Anforderungssignal eine GET-Anforderung ist; und
der Bewegtbildstrom eine GET-Antwort ist.

5. Servervorrichtung (200) nach einem der Ansprüche 1 bis 4, wobei der Parameter, der für eine Bewegtbildwiedergabe erforderlich ist, eines oder mehrere von Bewegtbild-Identifikationsinformationen, einem Bewegtbildstrom-Typ, Programmtakt-Referenz, PCR,-Informationen, einer Bewegtbildgröße, einer Rahmenrate oder Kanalinformationen umfasst.

6. Anzeigevorrichtung (100), umfassend:
eine Kommunikationseinheit (110), die ausgelegt ist, eine Kommunikation mit einer Servervorrichtung (200) vorzunehmen; und
eine Steuereinheit (120), die ausgelegt ist, ein Anforderungssignal für einen Parameter, der für eine Bewegtbildwiedergabe erforderlich ist, zur Servervorrichtung (200) ansprechend auf ein voreingestelltes Ereignis zu übertragen, und einen geparsten Parameter von der Servervorrichtung (200) zu empfangen und den empfangenen geparsten Parameter zu speichern,
wobei die Steuereinheit (120) ausgelegt ist, einen Bewegtbildstrom auf der Basis des gespeicherten Parameters ansprechend darauf, dass der Bewegtbildstrom gemäß einem Bewegtbild-Anforderungssignal empfangen wird, das zur Servervorrichtung (200) übertragen wird, wiederzugeben;
**dadurch gekennzeichnet, dass**:
der Parameter, der für eine Bewegtbildwiedergabe erforderlich ist, einen Parameter umfasst, der für die Anzeigevorrichtung (100) erforderlich ist, um eine Decodierungs- und Wiedergabeoperation vorzunehmen;
das Anforderungssignal für den Parameter, der für eine Bewegtbildwiedergabe erforderlich ist, in einem Metainformations-Anforderungssignal enthalten ist; und
der geparste Parameter in einem Metainformations-Antwortsignal enthalten ist,
wobei das voreingestellte Ereignis mindestens eines von einem Kanaländerungsereignis und einem Video-on-Demand, VoD,-Inhaltswiedergabeereignis umfasst.

7. Anzeigevorrichtung (100) nach Anspruch 6, wobei:
das Metainformations-Anforderungssignal eine HEAD-Anforderung ist;
das Metainformations-Antwortsignal eine HEAD-Antwort ist;
das Bewegtbild-Anforderungssignal eine GET-Anforderung ist; und
der Bewegtbildstrom eine GET-Antwort ist.

8. Anzeigevorrichtung (100) nach Anspruch 6 oder 7, wobei die Steuereinheit (120) ferner ausgelegt ist, den empfangenen Bewegtbildstrom auf der Basis des gespeicherten Parameters ohne Parsen des Parameters, der für eine Bewegtbildwiedergabe erforderlich ist, aus dem empfangenen Bewegtbildstrom ansprechend darauf, dass der Bewegtbildstrom empfangen wird, wiederzugeben.

9. Anzeigevorrichtung (100) nach einem der Ansprüche 6 bis 8, wobei der Parameter, der für eine Bewegtbildwiedergabe erforderlich ist, mindestens eines von Bewegtbild-Identifikationsinformationen, einem Bewegtbildstrom-Typ, Programmtaktreferenz, PCR,-Informationen, einer Bewegtbildgröße, einer Rahmenrate oder Kanalinformationen umfasst.

10. System (1000), umfassend:
eine Anzeigevorrichtung (100-1, 100-2), die ausgelegt ist, ein Anforderungssignal für einen Parameter, der für eine Bewegtbildwiedergabe erforderlich ist, zu einer Servervorrichtung (200) ansprechend auf ein voreingestelltes Ereignis zu übertragen; und
die Servervorrichtung (200), die ausgelegt ist, den Parameter, der aus einem Bewegtbildstrom geparst wird, zur Anzeigevorrichtung (100-1, 100-2) ansprechend darauf, dass das Anforderungssignal für den Parameter, der für eine Bewegtbildwiedergabe erforderlich ist, von der Anzeigevorrichtung (100-1, 100-2) empfangen wird, zu übertragen, und den Bewegtbildstrom zur Anzeigevorrichtung (100-1, 100-2) ansprechend darauf, dass ein Bewegtbild-Anforderungssignal von der Anzeigevorrichtung (100-1, 100-2) empfangen wird, zu übertragen,
wobei die Anzeigevorrichtung (100-1, 100-2) ferner ausgelegt ist, den geparsten Parameter von der Servervorrichtung (200) zu empfangen, und den empfangenen geparsten Parameter speichert, und die Anzeigevorrichtung (100-1, 100-2) ferner ausgelegt ist, den Bewegtbildstrom auf der Basis des gespeicherten Parameters ansprechend darauf, dass der Bewegtbildstrom gemäß dem Bewegtbild-Anforderungssignal empfangen wird, das zur Servervorrichtung (200) übertragen wird, wiederzugeben;
**dadurch gekennzeichnet, dass**:
der Parameter, der für eine Bewegtbildwiedergabe erforderlich ist, einen Parameter umfasst, der für die Anzeigevorrichtung (100-1, 100-2) erforderlich ist, um eine Decodierungs- und Wiedergabeoperation vorzunehmen;
das Anforderungssignal für den Parameter, der für eine Bewegtbildwiedergabe erforderlich ist, in einem Metainformations-Anforderungssignal enthalten ist; und
der Parameter, der aus dem Bewegtbildstrom geparst wird, in einem Metainformations-Antwortsignal enthalten ist,
wobei das voreingestellte Ereignis mindestens eines von einem Kanaländerungsereignis und einem Video-on-Demand, VoD,-Inhaltswiedergabeereignis umfasst.

11. Verfahren zur Steuerung einer Servervorrichtung, wobei das Verfahren umfasst:
Übertragen eines für eine Bewegtbildwiedergabe erforderlichen Parameters, der aus einem Bewegtbildstrom geparst wird, zu einer Anzeigevorrichtung (S720) ansprechend darauf, dass ein Anforderungssignal für den Parameter, der für eine Bewegtbildwiedergabe erforderlich ist, von der Anzeigevorrichtung empfangen wird (S710), und
Übertragen des Bewegbildstroms zur Anzeigevorrichtung (S740) ansprechend darauf, dass ein Bewegtbild-Anforderungssignal von der Anzeigevorrichtung empfangen wird (S730),
**dadurch gekennzeichnet, dass**:
der Parameter, der für eine Bewegtbildwiedergabe erforderlich ist, einen Parameter umfasst, der für die Anzeigevorrichtung erforderlich ist, um eine Decodierungs- und Wiedergabeoperation vorzunehmen;
das Anforderungssignal für den Parameter, der für eine Bewegtbildwiedergabe erforderlich ist, in einem Metainformations-Anforderungssignal enthalten ist; und
der Parameter, der aus dem Bewegtbildstrom geparst wird, in einem Metainformations-Antwortsignal enthalten ist.

12. Verfahren nach Anspruch 11, wobei das Überragen des geparsten Parameters zur Anzeigevorrichtung (S720) ein Parsen des Parameters, der für eine Bewegtbildwiedergabe erforderlich ist, aus dem Bewegtbildstrom und ein Übertragen des geparsten Parameters zur Anzeigevorrichtung ansprechend darauf, dass das Anforderungssignal für den Parameter, der für eine Bewegtbildwiedergabe erforderlich ist, von der Anzeigevorrichtung empfangen wird (S710), umfasst.

13. Verfahren nach Anspruch 11 oder 12, wobei:
das Metainformations-Anforderungssignal eine HEAD-Anforderung ist;
das Metainformations-Antwortsignal eine HEAD-Antwort ist;
das Bewegtbild-Anforderungssignal eine GET-Anforderung ist; und
der Bewegtbildstrom eine GET-Antwort ist.

14. Verfahren zur Steuerung einer Anzeigevorrichtung, wobei das Verfahren umfasst:
Übertragen eines Anforderungssignals für einen Parameter, der für eine Bewegtbildwiedergabe erforderlich ist, zu einer Servervorrichtung ansprechend auf ein voreingestelltes Ereignis (S810, S820), Empfangen des geparsten Parameters von der Servervorrichtung und Speichern des empfangenen geparsten Parameters (S830); und
Wiedergeben eines Bewegtbildstroms auf der Basis des gespeicherten Parameters (S860) ansprechend darauf, dass der Bewegtbildstrom empfangen wird (S850), ansprechend auf ein Bewegtbild-Anforderungssignal, das zur Servervorrichtung übertragen wird (S840);
**dadurch gekennzeichnet, dass**:
der Parameter, der für eine Bewegtbildwiedergabe erforderlich ist, einen Parameter umfasst, der für die Anzeigevorrichtung erforderlich ist, um eine Decodierungs- und Wiedergabeoperation vorzunehmen;
das Anforderungssignal für den Parameter, der für eine Bewegtbildwiedergabe erforderlich ist, in einem Metainformations-Anforderungssignal enthalten ist; und
der Parameter, der aus dem Bewegtbildstrom geparst wird, in einem Metainformations-Antwortsignal enthalten ist,
wobei das voreingestellte Ereignis mindestens eines von einem Kanaländerungsereignis und einem Video-on-Demand, VoD,-Inhaltswiedergabeereignis umfasst.

## Revendications

1. Appareil de serveur (200) comprenant :
une unité de communication (210) configurée pour effectuer une communication avec un appareil d'affichage (100) ; et
un dispositif de commande (220) configuré pour transmettre un paramètre requis pour une reproduction d'images animées, qui est analysé à partir d'un flux d'images animées, à l'appareil d'affichage (100) à la suite de la réception d'un signal de demande pour le paramètre requis pour une reproduction d'images animées en provenance de l'appareil d'affichage (100) et transmettre le flux d'images animées à l'appareil d'affichage (100) à la suite d'un signal de demande d'images animées qui est reçu de l'appareil d'affichage (100),
**caractérisé en ce que** :
le paramètre requis pour une reproduction d'images animées comprend un paramètre requis par l'appareil d'affichage (100) pour effectuer une opération de décodage et de reproduction ;
le signal de demande pour le paramètre requis pour une reproduction d'images animées est inclus dans un signal de demande de méta-informations ; et
le paramètre analysé à partir du flux d'images animées est inclus dans un signal de réponse de méta-informations.

2. Appareil de serveur (200) selon la revendication 1, dans lequel le dispositif de commande (220) est en outre configuré pour analyser le paramètre requis pour une reproduction d'images animées à partir du flux d'images animées et transmet le paramètre analysé au dispositif d'affichage (100) à la suite de la réception du signal de demande pour le paramètre requis pour une reproduction d'images animées en provenance de l'appareil affichage (100).

3. Appareil de serveur (200) selon la revendication 1 ou 2, comprenant en outre une unité de stockage configurée pour stocker le paramètre requis pour une reproduction d'images animées,
dans lequel le dispositif de commande (220) est en outre configuré pour récupérer un paramètre correspondant au signal de demande pour le paramètre requis pour une reproduction d'images animées à partir de l'unité de stockage et transmettre le paramètre récupéré à l'appareil d'affichage (100) à la suite de la réception du signal de demande pour le paramètre requis pour une reproduction d'images animées en provenance de l'appareil d'affichage (100).

4. Appareil de serveur (200) selon l'une quelconque des revendications 1 à 3, dans lequel :
le signal de demande de méta-informations est une demande HEAD ;
le signal de réponse de méta-informations est une réponse HEAD ;
le signal de demande d'images animées est une demande GET ; et
le flux d'images animées est une réponse GET.

5. Appareil de serveur (200) selon l'une quelconque des revendications 1 à 4, dans lequel le paramètre requis pour une reproduction d'images animées comprend des informations d'identification d'images animées et/ou un type de flux d'images animées et/ou des informations de référence d'horloge de programme (PCR) et/ou une taille d'images animées et/ou un taux de trame et/ou des informations de canal.

6. Appareil d'affichage (100) comprenant :
une unité de communication (110) configurée pour effectuer une communication avec un appareil de serveur (200) ; et
un dispositif de commande (120) configuré pour transmettre un signal de demande pour un paramètre requis pour une reproduction d'images animées à l'appareil de serveur (200) à la suite d'un événement prédéterminé et pour recevoir un paramètre analysé en provenance de l'appareil de serveur (200) et stocker le paramètre analysé reçu ;
dans lequel le dispositif de commande (120) est configuré pour reproduire un flux d'images animées en se basant sur le paramètre stocké à la suite du flux d'images animées qui est reçu en fonction d'un signal de demande d'images animées transmis à l'appareil de serveur (200),
**caractérisé en ce que** :
le paramètre requis pour une reproduction d'images animées comprend un paramètre requis par l'appareil d'affichage (100) pour effectuer une opération de décodage et de reproduction ;
le signal de demande pour le paramètre requis pour une reproduction d'images animées est inclus dans un signal de demande de méta-informations ; et
le paramètre analysé est inclus dans un signal de réponse de méta-informations,
dans lequel l'événement prédéterminé comprend un événement de changement de canal et/ou un événement de reproduction de contenu de vidéo à la demande (VoD).

7. Appareil d'affichage (100) selon la revendication 6, dans lequel :
le signal de demande de méta-informations est une demande HEAD ;
le signal de réponse de méta-informations est une réponse HEAD ;
le signal de demande d'images animées est une demande GET ; et
le flux d'images animées est une réponse GET.

8. Appareil d'affichage (100) selon la revendication 6 ou 7, dans lequel le dispositif de commande (120) est en outre configuré pour reproduire le flux d'images animées reçu en se basant sur le paramètre stocké sans analyser le paramètre requis pour une reproduction d'images animées à partir du flux d'images animées reçu à la suite de la réception du flux d'images animées.

9. Appareil d'affichage (100) selon l'une quelconque des revendications 6 à 8, dans lequel le paramètre requis pour une reproduction d'images animées comprend des informations d'identification d'images animées et/ou un type de flux d'images animées et/ou des informations de référence d'horloge de programme (PCR) et/ou une taille d'images animées et/ou un taux de trame et/ou des informations de canal.

10. Système (1000) comprenant :
un appareil d'affichage (100-1, 100-2) configuré pour transmettre un signal de demande pour un paramètre requis pour une reproduction d'images animées à un appareil de serveur (200) à la suite d'un événement prédéterminé ; et
l'appareil de serveur (200) configuré pour transmettre le paramètre analysé à partir d'un flux d'images animées à l'appareil d'affichage (100-1, 100-2) à la suite du signal de demande pour le paramètre requis pour une reproduction d'images animées qui est reçu de l'appareil d'affichage (100-1, 100-2) et transmettre le flux d'images animées à l'appareil d'affichage (100-1, 100-2) à la suite d'un signal de demande d'images animées qui est reçu de l'appareil d'affichage (100-1, 100-2),
dans lequel l'appareil d'affichage (100-1, 100-2) est en outre configuré pour recevoir le paramètre analysé en provenance de l'appareil de serveur (200) et stocke le paramètre analysé reçu et l'appareil d'affichage (100-1, 100-2) est en outre configuré pour reproduire le flux d'images animées en se basant sur le paramètre stocké à la suite du flux d'images animées qui est reçu en fonction du signal de demande d'images animées transmis à l'appareil de serveur (200),
**caractérisé en ce que** :
le paramètre requis pour une reproduction d'images animées comprend un paramètre requis par l'appareil d'affichage (100-1, 100-2) pour effectuer une opération de décodage et de reproduction ;
le signal de demande pour le paramètre requis pour une reproduction d'images animées est inclus dans un signal de demande de méta-informations ; et
le paramètre analysé à partir du flux d'images animées est inclus dans un signal de réponse de méta-informations ; et
dans lequel l'événement prédéterminé comprend un événement de changement de canal et/ou un événement de reproduction de contenu de vidéo à la demande (VoD).

11. Procédé de commande d'un appareil de serveur, le procédé consistant :
à transmettre un paramètre requis pour une reproduction d'images animées, qui est analysé à partir d'un flux d'images animées, à l'appareil d'affichage (S720) à la suite d'un signal de demande pour le paramètre requis pour une reproduction d'images animées qui est reçu de l'appareil d'affichage (S710) ; et
à transmettre le flux d'images animées à l'appareil d'affichage (S740) à la suite d'un signal de demande d'images animées qui est reçu de l'appareil d'affichage (S730),
**caractérisé en ce que** :
le paramètre requis pour une reproduction d'images animées comprend un paramètre requis par l'appareil d'affichage pour effectuer une opération de décodage et de reproduction ;
le signal de demande pour le paramètre requis pour une reproduction d'images animées est inclus dans un signal de demande de méta-informations ; et
le paramètre analysé à partir du flux d'images animées est inclus dans un signal de réponse de méta-informations.

12. Procédé selon la revendication 11, dans lequel la transmission du paramètre analysé à l'appareil d'affichage (S720) consiste à analyser le paramètre requis pour une reproduction d'images animées à partir du flux d'images animées et à transmettre le paramètre analysé à l'appareil d'affichage à la suite du signal de demande pour le paramètre requis pour une reproduction images animées qui est reçu de l'appareil d'affichage (S710).

13. Procédé selon la revendication 11 ou 12, dans lequel :
le signal de demande de méta-informations est une demande HEAD ;
le signal de réponse de méta-informations est une réponse HEAD ;
le signal de demande d'images animées est une demande GET ; et
le flux d'images animées est une réponse GET.

14. Procédé de commande d'un appareil d'affichage, Le procédé consistant :
à transmettre un signal de demande pour un paramètre requis pour une reproduction d'images animées à un appareil de serveur à la suite d'un événement prédéterminé (S810, S820), à recevoir le paramètre analysé en provenance de l'appareil de serveur et à stocker le paramètre analysé reçu (S830) ; et
à reproduire un flux d'images animées en se basant sur le paramètre stocké (S860) à la suite du flux d'images animées qui est reçu (S850) à la suite d'un signal de demande d'images animées transmis à l'appareil de serveur (S840),
**caractérisé en ce que** :
le paramètre requis pour une reproduction d'images animées comprend un paramètre requis par l'appareil d'affichage pour effectuer une opération de décodage et de reproduction ;
le signal de demande pour le paramètre requis pour une reproduction d'images animées est inclus dans un signal de demande de méta-informations ; et
le paramètre analysé à partir du flux d'images animées est inclus dans un signal de réponse de méta-informations,
dans lequel l'événement prédéterminé comprend un événement de changement de canal et/ou un événement de reproduction de contenu de vidéo à la demande (VoD).
